# EUROPEAN PATENT APPLICATION

(11) **EP 0 924 674 A1**
(43) Date of publication of application: **23.06.1999**
(21) Application number: 98123803.3
(22) Date of filing: 15.12.1998
(51) Int. Cl.: G09B 29/10, G09B 29/04, G09B 29/00

(54) **Intelligent street map**

(30) Priority: 17.12.1997 IT UD970238
(71) Applicant: Bertotti, Ilario, 30122 Venezia (IT)
(72) Inventor: Bertotti, Ilario, 30122 Venezia (IT)
(74) Representative: Petraz, Gilberto Luigi

(57) **Abstract**

A map consisting of a sheet-type support (11) on which, in a defined first area (10a), there is a representation of a geographical place, with the identification of a plurality of topographical points or elements, the support (11) being able to represent a second (10b) and/or a third (10c) area, the map (10) incorporating an electronic card (13) connected at outlet with a plurality of visual signalling means (15) which can be selectively activated, distributed on the street map (10) in correspondence with the desired points to be identified and, at inlet, with a receiver device (19) suitable to communicate with stationary transceiver devices (20) arranged in the geographical place represented by the map (10) in correspondence with defined points to identify the position, when the map (10) approaches a transceiver device (20), this causes the automatic lighting up of the visual signalling mean (15) corresponding to the position of the device (20) to signal the actual position of the user.

## Description

### FIELD OF THE INVENTION

This invention concerns an intelligent street map, as set forth in the main claim.

The intelligent street map according to the invention allows to visually signal to the user his actual position and/or that he has reached topographical points or elements of considerable interest which were his destination or that he was looking for.

In the following description, the term topographical points and elements should be taken to mean characterising places or elements of the geographical place shown on the map, such as streets, monuments, banks, public premises, hotels, public transport routes or stops, etc.

We shall use the term map for simplicity, to indicate any graphical representation whatsoever, to scale, of a geographical place, such as a map, a plan, a location plan.

### BACKGROUND OF THE INVENTION

The state of the art includes street maps representing symbolically and to scale a bird's eye view of a country, a region, a city or a place in general. These aerial representations are usually divided into lines and columns, identified with a relative letter and/or number, which define a plurality of sectors each of which can be identified univocally by coordinates of numbers/letters.

This allows the user to identify on the map a desired topographical point or element chosen from a list wherein each of these points or elements is coupled with the relative coordinates.

However, the coordinates allow the user only to look for the desired area, identified on the map by a sector which can be bigger or smaller.

Searching can take time and reading the map can be inconvenient, also because these topographical points are usually identified by symbols or characters which are small in size, or they are omitted when there are too many of them, for example in the central areas of big cities.

Reading these maps is difficult and impractical, the map has to be unfolded, turned upside down, it is difficult to identify things, and moreover a minimum of lighting is required. People wishing to use these street maps also often have difficulty in orienting the map or in identifying the exact point where they are at the moment of reading.

Furthermore, it often happens that the user is not able to identify the shortest and quickest route to reach places on the map, or is not sure that the topographical point or element he has reached is in fact the one he was looking for.

Therefore he often has to have recourse to tourist guides, or has to ask for help from passers by.

Moreover, with street maps which are known to the state of the art, it is very difficult to identify, from a plurality of similar topographical points or elements, for example a list of hotels, which is the nearest the point where the map is being read.

The present applicant has devised and embodied this invention to overcome the shortcomings of street maps known to the art, and to achieve further advantages as will be shown hereafter.

### SUMMARY OF THE INVENTION

The invention is set forth and characterised in the main claim, while the dependent claims describe other characteristics of the main embodiment.

The purpose of the invention is to simplify the reading of street maps, making it possible even for occasional visitors, and to allow them to identify instantaneously and precisely desired topographical points or elements which they are specifically looking for.

Another purpose is to show visually on the map, and automatically to the user, that predetermined topographical points or elements have been reached, or the place where the user is at that moment.

A further purpose is to provide intelligent street maps at reasonable cost, easy to carry and to use.

The intelligent street map according to the invention has a sheet-type support made of any type of flexible or rigid material; associated therewith is an electronic card to activate, as will be described hereafter, a plurality of visual signalling means distributed on the map in correspondence with topographical points or elements of importance.

According to a variant, the sheet-type support is made of or covered with waterproof material.

The electronic card and the visual signalling means are connected by means of circuits contained in the thickness of the support.

When a flexible support is used, which can therefore be folded just like ordinary maps, the circuits are flexible and are contained inside the map when folded.

According to the invention, the electronic card functions both automatically, in which case it advises the user when he/she has reached or is approaching pre-determined topographical points of importance, and also manually, in which case it allows the user to search for and identify desired topographical points or elements on the map instantaneously, by activating the relative visual signalling means.

According to variants of the invention, the electronic card functions only automatically or only manually.

For manual functioning, the electronic card has an interface for the user arranged on the map, for example a keyboard; this allows him to select the desired topographical point or element to be identified from a selection table or similar. According to a variant, the selection table is divided into a plurality of boxes each one of which is univocally identified by visual signalling means governed by the electronic card and which can be selected sequentially by acting on the keyboard.

According to another variant, the selection table comprises at least a first selectable macro-list of topographical points sub-divided into categories of interest and at least a second detailed list in which for each of the categories of the first macro-list the relative points where they are used are listed.

According to a further variant, the selection table itself acts as an interface with the user, there being included at least a key in correspondence with each individual line and column or with each individual box.

For automatic functioning, the electronic card has an at least receiver unit suitable to communicate with a plurality of transceiver units each of which is provided in proximity with respective topographical points or elements of the area shown on the street map.

For example, the transceiver units may be located in correspondence with the public transport stops, in the case of city maps, or in correspondence with traffic lights or cross roads in the case of road maps outside the city.

According to the invention, the transceiver units provided on the points to be signalled send an identification signal to the receiver unit on the electronic card when the user is in proximity of the point where the stationary transceiver unit is located.

In response to the identification signal, the electronic card activates the visual signalling means located on the street map in correspondence with the topographical point or element reached by the user, and thus allows him to identify it immediately so that he knows immediately where he is.

According to a variant, at least the receiver units on the map consist of transponders which do not need any electricity supply, as they are fed by the transmission signal received; this allows to have unlimited autonomy and to position them anywhere at all.

The receiver units of the stationary type also consist advantageously of transponders, which also facilitates the installation operations and makes them easier to conceal.

According to a variant, the visual signalling means cooperate with audio signalling means.

According to another variant, the audio signalling means signal when an important topographical point or element has been reached, even with the map folded.

### BRIEF DESCRIPTION OF THE DRAWINGS

The attached Figures are given as a non-restrictive example, and show some preferential embodiments of the invention as follows:
- Fig. 1: is a diagram showing an intelligent street map according to the invention;
- Fig. 2: shows the street map of Fig. 1 of the folding type;
- Fig. 3: shows the street map of Fig. 1 enlarged;
- Fig. 4: shows an example of the automatic function of the street map shown in Fig. 1.

### DETAILED DESCRIPTION OF THE PREFERRED EMBODIMENTS

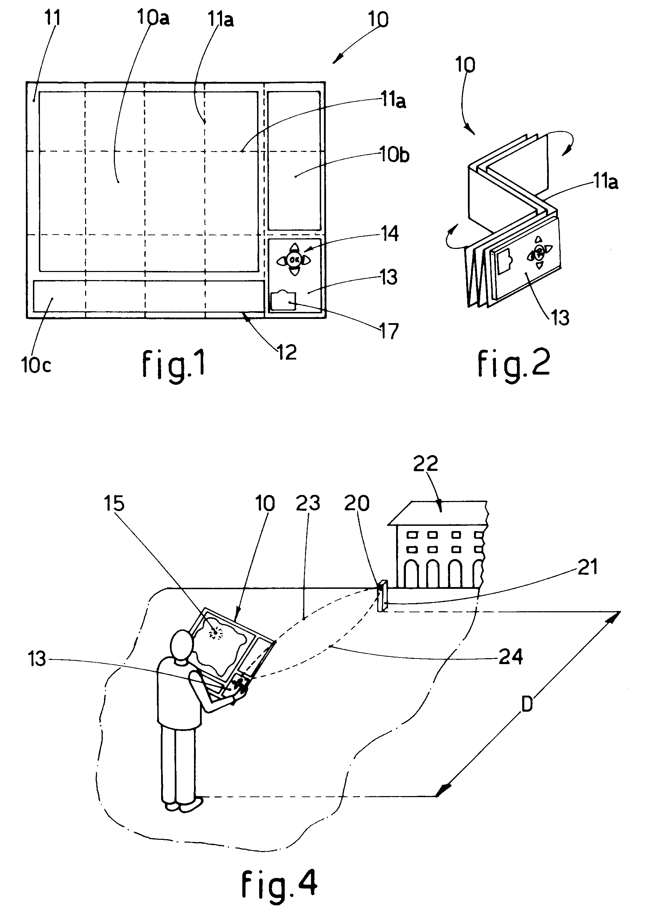

The intelligent street map 10 shown in the attached Figures consists of a sheet-type support 11, for example made of flexible material, advantageously water-proof, such as plasticised paper, equipped with horizontal and vertical preferential folding lines 11a which allow it to be folded when not in use (Fig. 2).

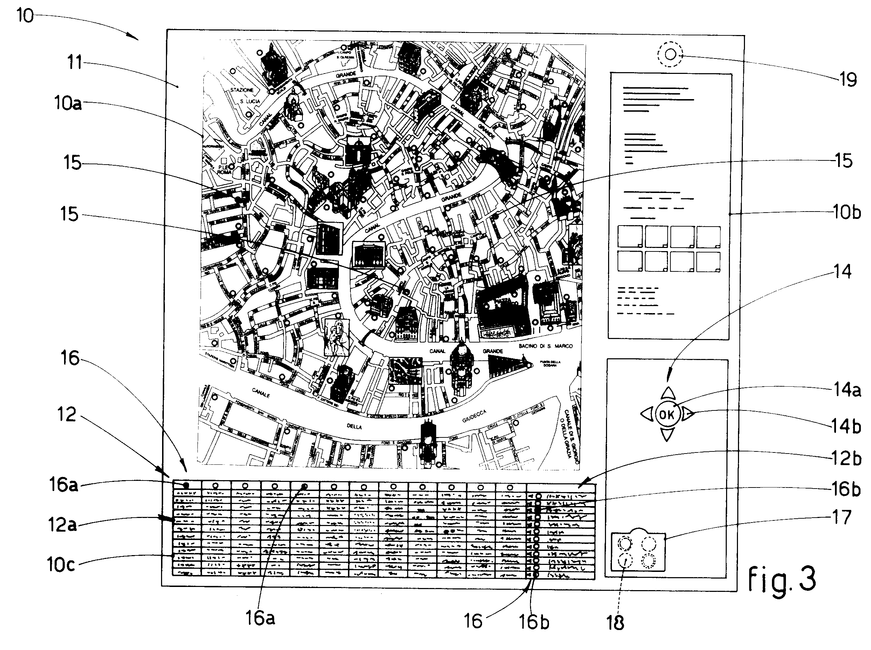

As shown in Figs. 1 and 3, the street map 10 has an area 10a which represents, in diagram form and to scale, an aerial view of a geographical place, in this case a city, an area 10b with instructions on how to use the street map 10 and/or information about the area shown, useful addresses or otherwise, an area 10c where there is a selection table 12 and an electronic card 13.

The electronic card 13 is associated with the support 11 in correspondence with one of the edges, in this case the front one, which remains visible when the street map 10 is folded.

Above the electronic card 13 there is an interface, in this case a keyboard 14 of the type with sequential selection, and at the lower part there is a chamber 17 which can be opened to house an autonomous feed source consisting, in this case, of a plurality of mini-batteries 18. The chamber 17, according to a variant, may be closed and inaccessible.

According to a variant, outside the chamber 17 there is a connection by means of which it is possible to connect a source of power to recharge the batteries 18.

According to a variant, the autonomous source of power consists of dry batteries. According to another variant the autonomous source of power is housed in a piece of material, for example like a pocket, which can be folded back inside the street map 10 when closed.

According to another variant, the street map 10 can be fed from outside, for example by a cable connected to the cigarette lighter in a motor car or similar, so that it can be used on a journey.

In this case, the keyboard 14 comprises five keys, a central key 14a for confirmation and four peripheral keys 14b for selection.

The electronic card 13 is associated at outlet with a plurality of visual signalling means, in this case consisting of first leds 15 and second leds 16 (Fig. 3); the first leds 15 are distributed on the street map 10 in correspondence with desired and specific topographical points or elements and the second leds 16 are arranged in an orderly manner on the selection table 12 to identify univocally the lines and the columns.

The selection table 12 is divided, in this case, into a first horizontal table 12a and a second vertical table 12b.

The second leds 16 are divided into horizontal leds 16a, each identifying a column of the first horizontal table 12a, and vertical leds 16b, each one identifying a line of the second vertical table 12b.

According to the invention, the first leds 15 and second leds 16 are associated with the electronic card 13 by means of circuits contained in the thickness of the support 11, which allow the street map 10 to be folded.

The street map 10 allows the topographical points or elements chosen by the user on the selection table 12 to be visually identified instantaneously. The user, using the selection keys 14b of the keyboard 14, can select sequentially a particular box on the table 12 identified univocally by a single horizontal led 16a and a single vertical led 16b which light up.

To be more exact, with the selection keys 14b which are located above and below the confirmation key 14a, the user selects in sequence the category of services or places of interest from those listed in the second vertical table 12b.

For example, the categories can comprise museums, banks, public transport routes or stops, hotels, etc.

Then, acting on the keys 14b located on the left and right of the confirm key 14a, the user selects the specific point of interest belonging to the pre-selected category. Everything is displayed by the lighting up of the relative led 16a.

After having selected on the table 12 the desired point to be looked for, the user presses the confirm key 14a, which causes the led or leds 15 corresponding to the point selected to light up on the street map 10. By comparing the illuminated point corresponding to his actual position with the selected point, the user can identify the distance and also choose the shortest and most rational route.

According to a variant, the table 12 may include boxes to identify homogenous groups such as public telephones, restaurants, hotels, banks, petrol stations, etc.

According to another variant, the selection table 12 itself acts as a keyboard, at least one key being provided in correspondence with each box.

The selection of the point to be looked for is coupled, as already described, with the identification of the topographical point where the user is located, with a consequent lighting up of a led 15 in correspondence with the point on the street map 10 reached by the user.

To this purpose, the electronic card 13 has an at least receiver device 19 able to receive a signal 23 generated by stationary transceiver devices 20 located, in this case inside a column 21, in proximity with specific topographical points or elements 22 (Fig. 4).

According to a variant, the stationary transceiver devices 20 are applied directly on elements which are already present at particular topographical points, for example at public transport stops, at traffic lights in correspondence with a cross-road, or similar.

The stationary transceiver devices 20 send a different and characterising signal 24, which activates only the led 15 identifying the corresponding topographical point or element on the street map 10, thus allowing the user to immediately recognise the position where he is.

According to the invention, the led 15 corresponding to the user's position is activated only when he has reached a desired and pre-set distance "D" from the point at which the stationary transceiver 20 is located.

In the preferential embodiment of the invention, the stationary transceiver devices 20 are transponders with a diameter of around 5 cm which can easily be applied and concealed in correspondence with the topographical points.

## Claims

1. Intelligent street map consisting of a sheet-type support (11) on which, in a defined first area (10a), there is a representation to scale of an aerial view of a specific geographical place, with the identification of a plurality of topographical points or elements such as, for example, streets, places of cultural or artistic interest, hotels, banks, public transport routes or stops, etc., the support (11) being able to represent a second (10b) and/or a third (10c) area to help the user to read the map, the map being characterised in that it incorporates an electronic card (13) connected at outlet with a plurality of visual signalling means (15) which can be selectively activated, distributed on the street map (10) at least in correspondence with the desired topographical points or elements to be identified and, at inlet, with an at least receiver device (19) suitable to communicate with stationary transceiver devices (20) arranged in the geographical place represented by the map (10) in correspondence with defined points to identify the position, when the map (10) approaches a specific transceiver device (20), this causes the automatic lighting up of the visual signalling mean (15) corresponding to the position of the device (20) to signal the actual position of the user.

2. Street map as in Claim 1, characterised in that it includes a selection table (12) with relative means (14) to choose the topographical point or element to be searched for on the map (10), the selection of the topographical point or element sought in the selection table (12) causing the corresponding visual signalling means (15) to light up on the map (10).

3. Street map as in Claim 1, characterised in that the at least receiver device (19) on the map (10) is a transponder.

4. Street map as in Claim 2, characterised in that the selection table (12) is sub-divided into at least a first macro-list (12b) of principal categories of interest concerning the topographical points or elements which can be sequentially selected by means of selection means (14) and at least a second list (12a) listing the elements of each of the principal categories.

5. Street map as in Claim 2, characterised in that each category or point on the selection table (12) is associated with a selection key.

6. Street map as in Claim 3 or 4, characterised in that each category or point on the selection table (12) is associated with a visual signalling mean (16a, 16b) which is activated when the relative selection is made.

7. Street map as in any claim hereinbefore, characterised in that the visual signalling means (15, 16a, 16b) are connected to the electronic card (13) by means of circuits contained in the thickness of the support (11).

8. Street map as in Claim 1, characterised in that it has a chamber (17) to house an autonomous electric power source contained inside the folded map.

9. Street map as in Claim 1, characterised in that it is suitable to cooperate with external feed means, for example the cigarette lighter in a motor car.

10. Street map as in any claim hereinbefore, characterised in that the visual signalling means (15, 16a, 16b) cooperate with audio signalling means.
